# EUROPÄISCHE PATENTSCHRIFT

(11) **EP 2 987 613 B1**
(45) Veröffentlichungstag und Bekanntmachung des Hinweises auf die Patenterteilung: **04.04.2018**
(21) Anmeldenummer: 14181663.7
(22) Anmeldetag: 20.08.2014
(51) Int. Cl.: B29C 49/46, B29C 33/72, B65B 3/02, B29C 49/06, B29C 49/12, B29C 49/48

(54) **Formfüllmaschine**
Mould filling machine
Remplisseuse de moule

(43) Veröffentlichungstag der Anmeldung: 24.02.2016
(73) Patentinhaber: Krones AG, 93073 Neutraubling (DE)
(72) Erfinder: Roidl, Wolfgang, 93073 Neutraubling (DE)
(74) Vertreter: Grünecker Patent- und Rechtsanwälte PartG mbB

(56) Entgegenhaltungen:
- WO-A1-2012/156013
- WO-A1-2014/095386

## Beschreibung

Die Erfindung betrifft eine Formfüllmaschine gemäß dem Oberbegriff des Anspruchs 1.

### Stand der Technik

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Weiterhin zeigt die wo 2012/156013 A1 eine Formfüllmaschine mit mehreren Formfüllstation. Die Formfüllstationen umfassen dabei zwei Formhälften, die zu Reinigungszwecken geöffnet und geschlossen werden können und der Innenraum der Formhälften mithilfe eines Reinigungselements gereinigt werden kann.

Die WO 2014/095386 A1 zeigt eine weitere Formfüllmaschine. In dieser sind Formblöcke vorgesehen, die zwischen zwei Positionen verfahrbar sind. In der ersten Position berühren sich zwei benachbarte Formblöcke und können einen Vorformling einschließen, wobei dieser dann zwischen den Formblöcken zu einem Behälter ausgeformt werden kann. In der zweiten Position sind die beiden Formblöcke voneinander entfernt und berühren zwei weitere benachbarte Formblöcke, sodass zwischen diesen erneut ein Behälter ausgeformt werden kann und der erste Behälter aus der Maschine entnommen werden kann. Während dem Verfahren der Formblöcke von der ersten zur zweiten Position können Reinigungseinrichtungen die Reinigung der Formblöcke durchführen.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Bei den bekannten Formfüllmaschinen kann es während dem Ausformen und/oder Befüllen mit Produkt zum Platzen des bereits vollständig oder noch nicht vollständig ausgeformten Behälters kommen. Bisherige Maßnahmen zum Entfernen der Überreste des geplatzten Behälters sind langwierig und führen daher zu erheblichen Stillstandszeiten der Formfüllmaschine.

### Aufgabe

Aufgabe der vorliegenden Erfindung ist es, bekannte Vorrichtungen und Verfahren zum Ausformen und Füllen von Kunststoffbehältern in vorteilhafter Weise weiterzubilden.

### Lösung

Diese Aufgabe wird mit einer Formfüllmaschine nach Anspruch 1 gelöst. Vorteilhafte Ausführungsformen der Erfindung sind in den Unteransprüchen definiert.

Die erfindungsgemäße Formfüllmaschine ist dadurch gekennzeichnet dass die Formhälften relativ zueinander bewegbar sind und eine Reinigungseinrichtung vorgesehen ist, die die geöffneten Formhälften reinigen kann. Somit können auch Verunreinigungen der Formhälften, insbesondere nach dem Platzen eines mit Produkt gefüllten Behälters entfernt werden.

In einer Ausführungsform der erfindungsgemäßen Formfüllmaschine kann vorgesehen sein, dass die Formhälften dreiteilig ausgebildet sind, wobei jede Formhälfte einen Formträger, eine Formschale und eine Form umfasst und die Teile der Formhälften relativ zueinander bewegbar sind. Somit können die Formhälften nicht nur äußerlich gereinigt werden, sondern auch die Zwischenräume, in denen auch eventuelle Hydraulikeinrichtungen angeordnet sein können, können von Verschmutzungen befreit werden.

In einer alternativen Ausführungsform kann vorgesehen sein, dass die Formhälften zweiteilig ausgebildet sind und einen Formträger und eine Form umfassen. Dieser im Gegensatz zur vorherigen Ausführungsform reduzierte und kompaktere Aufbau erleichtert die Reinigung der Formhälften.

In einer vorteilhaften Weiterbildung dieser Ausführungsform ist vorgesehen, dass zwischen den Teilen der Formhälften eine Antriebseinheit angeordnet ist, die die Teile jeder Formhälfte relativ zueinander bewegen kann.

Es kann vorgesehen sein, dass die Antriebseinheit einer Hydraulikeinheit ist oder diese umfasst. Hydraulische Mittel zur Bewegung der Teile der Formhälften können weniger empfindlich gegenüber Flüssigkeiten ausgeführt werden als beispielsweise elektronische Elemente wie Elektromotoren oder Stellantriebe.

In einer besonders bevorzugten Weiterbildung diese Ausführungsform ist vorgesehen, dass die Antriebseinheit auch die Formhälften bewegen kann. So können nicht nur die einzelnen Bestandteile der Formhälften relativ zueinander bewegt werden, sondern auch die Formhälften so weit voneinander weg bewegt werden, dass eine effektive Reinigung erreicht werden kann.

Es kann weiterhin vorgesehen sein dass die Teile der Formhälften jeweils auf einer gemeinsamen Führung angeordnet sind. Somit kann die Anzahl der nötigen Antriebselemente stark reduziert werden und die Bewegung der einzelnen Teile der Formhälften sicher gesteuert werden. Erfindungsgemäß ist vorgesehen, dass die Formhälften zwischen einer Ausformposition, einer Aufnahmeposition und einer Reinigungsposition verfahrbar sind. Dabei ist die Ausformposition die Position, in der die Formhälften geschlossen sind und ein Behälter innerhalb der Formhälften ausgeformt werden kann. Die Aufnahmeposition entspricht einer geöffneten Position der Formhälften, wobei der Abstand der Formhälften zueinander oder der Öffnungswinkel derart ist, dass ein Vorformling in den Innenbereich der Formhälften aufgenommen werden kann. Die Reinigungsposition ist eine Position, in der die Formhälften und oder die Teile der Formhälften gereinigt werden können. Dazu kann auch vorgesehen sein, dass die Formhälften und/oder die Teile der Formhälften in der Reinigungsposition einen größeren Öffnungswinkel oder Abstand zueinander aufweisen, als in der Aufnahmeposition.

In einer weiteren Ausführungsform wird entweder ein flüssiges Reinigungsmedium oder ein gasförmiges Reinigungsmedium verwendet. Während die Verwendung eines gasförmigen Reinigungsmediums einen schnellen Wiedereinsatz der Formhälften ermöglicht, da ein Trocknungsschritt entfallen kann, erlaubt die Reinigung mit flüssigen Reinigungsmedien gegebenenfalls eine gründliche Reinigung, so dass sämtliche Verschmutzungen, beispielsweise durch das Platzen von Behältern, entfernt werden können.

In einer Ausführungsform ist die Reinigungseinrichtung an der Peripherie der Formfüllmaschine angeordnet. Diese Ausführungsform erlaubt das Reinigen einzelner Formhälften, beispielsweise nach einer erkannten Verunreinigung durch umherspritzendes Produkt. Da die Reinigungseinrichtung nicht in der Formfüllmaschine angeordnet ist, kann hier Platz gespart werden.

In einer alternativen Ausführungsform ist jeder Formfüllstation eine Reinigungseinrichtung zugeordnet. Die Reinigung der Formhälften einer Formfüllstation kann hier unabhängig von den übrigen Formfüllstationen erfolgen. Weiterhin ist durch die in der Formfüllstation mitgeführte Reinigungseinrichtung auch eine Reinigung im Betrieb der Formfüllmaschine möglich, beispielsweise im Zeitintervall zwischen dem Ausgeben eines Behälters aus der Formfüllstation und der Aufnahme eines neuen Vorformlings.

### Kurze Beschreibung der Figuren

- Figur 1:: schematische Darstellung einer erfindungsgemäßen Formfüllmaschine
- Figur 2:: schematische Darstellung einer Formfüllstation
- Figur 3a-b:: schematischer Darstellung von Formhälften dreiteiliger und zweiteiliger Ausführung
- Figur 4a-b:: schematische Darstellung einer Reinigungseinrichtung

### Ausführliche Beschreibung

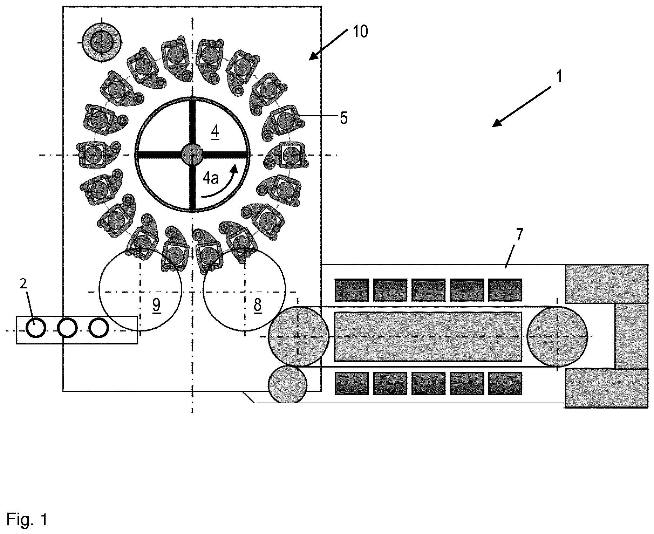

In Figur 1 ist eine Fromfüllanlage 1 mit einer erfindungsgemäßen Formfüllmaschine 10 dargestellt. Diese umfasst in der hier dargestellten Ausführungsform ein Karussell 4, das sich in der Drehrichtung 4a drehen kann. An dem Karussell 4 sind ein oder mehrere Formfüllstationen 5 angeordnet, in denen ein Vorformling ausgeformt und befüllt werden kann. Dazu umfassen die Formfüllstationen 5 jeweils eine Hohlform, in der der Vorformling eingespannt werden kann, und in der der Vorformling ausgeformt und gegebenenfalls auch bei geschlossener Hohlform befüllt wird. Zu diesem Zweck ist vorgesehen, dass jede Formfüllstation über ein oder mehrere Füllventile zum Abfüllen von Produkt in den Vorformling und/oder in den Behälter verfügt.

Die Vorformlinge können aus einem Ofenbereich 7 über entsprechende Mittel zum Transport 8, wie beispielsweise Drehsterne oder Förderer, dem Karussell 4 zugeführt werden, wobei der Transport der Vorformlinge beispielsweise im Neck-Handling-Verfahren erfolgen kann. Zwischen dem Ofenbereich 7 und dem Karussell 4 können beispielsweise weitere Behandlungseinrichtungen, wie Inspektionseinrichtungen, Reinigungseinrichtungen oder Ähnliches angeordnet sein.

Die befüllten und ausgeformten Behälter können aus dem Karussell über eine entsprechende Transporteinrichtung 9, wie beispielsweise einen Drehstern, aus dem Karussell 4 abtransportiert werden. Die ausgeformten und befüllten Behälter 2 können dann beispielsweise weiteren Behandlungseinrichtungen wie einem Verschließer oder Etikettiereinrichtungen oder Druckeinrichtungen zugeführt werden. Diese können ebenfalls als Bestandteil der Formfüllmaschine 10 verstanden werden. Grundsätzlich umfasst die Formfüllmaschine jedoch wenigstens ein Karussell mit entsprechenden Formfüllstationen, in denen die Behälter bzw. Vorformlinge ausgeformt und befüllt werden können.

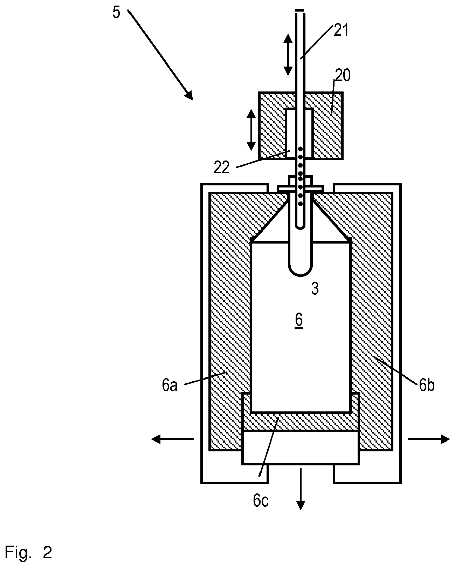

Figur 2 zeigt eine detaillierte schematische Ansicht einer Formfüllstation 5, wie sie in Figur 1 auf dem Karussell 4 dargestellt ist. Die Formfüllstation 5 umfasst eine Form 6, die als Hohlform ausgebildet ist. Die Form 6 umfasst dazu üblicherweise zwei Formhälften 6a und 6b und einen Boden 6c, die zusammen als Formteile bezeichnet werden können. Weiterhin umfasst die Formfüllstation einen Form/Füllblock 20 der beispielsweise zum Befüllen und Ausformen des Vorformlings 3 verwendet werden kann. Dazu umfasst der Form/Füllblock 20 beispielsweise die Reckstange 21 und eventuell eine Verschlusseinrichtung 22, die über der Öffnung des Vorformlings 3 positioniert werden kann.

Um einen Behälter zu formen, wird zunächst der Vorformling in die Formfüllstation 5 eingebracht und von der Form 6 bzw. den Formhälften 6a und 6b und dem Boden 6c umschlossen. Durch die Reckstange 21 und eventuelle Zuleitungen für Produkt und/oder Druckluft wird der Vorformling dann entsprechend der durch die Form 6 vorgegebenen Form zu einem Behälter ausgeformt. Gleichzeitig oder danach kann er vollständig befüllt werden.

Da in der Formfüllmaschine das Befüllen zeitgleich oder zumindest direkt nach dem Ausformen des Behälters erfolgt, kann es bei Fehlern in der Produktion zum Umherspritzen von Produkt oder zum Platzen von einzelnen Behältern in den Formfüllstationen kommen. Dementsprechend ist eine Reinigung der Formfüllstationen vorteilhaft.

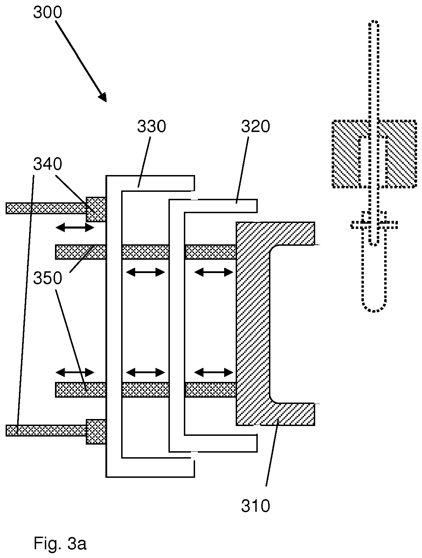

Die Formhälften 6a und 6b wie sie in der Figur 2 dargestellt sind, aber auch der Boden 6c sind üblicherweise dreiteilig ausgebildet, wie dies beispielsweise in Figur 3a angedeutet ist. Dabei umfasst die in Figur 3a dargestellt Formhälften ein Formteil bzw. eine Hohlform 310, die direkt mit dem Vorformling in Kontakt tritt und beim Ausformen des Vorformlings die abschließende Behälterform vorgibt. Weiterhin umfasst die Formhälfte eine Formschale 320, mit deren Hilfe Druck auf die Hohlform beim Zusammentreffen der Formhälften ausgeübt werden kann, beispielsweise durch das Einblasen von Druckluft in den Bereich zwischen der Formschale und der Hohlform, sodass die Hohlformen der Formhälften zusammengedrückt werden.

Die Formschale 320 mit der innen liegenden Hohlform 310 wird von einem Formträger 330 der Formhälfte gehalten. Um einen Behälter aufzunehmen, wird die Form geöffnet. Dabei kann das Öffnen durch translatorische Bewegung der Formhälften zueinander erfolgen oder indem die beiden Formhälften um ein gemeinsames Drehzentrum gespreizt werden. Es kann vorgesehen sein, dass diese Bewegung durch eine außen liegende Antriebseinheit 340 bewirkt wird, die die einzelnen Formhälften antreiben kann. Es ist hier für das Öffnen und Schließen der Formhälften im Rahmen der Produktion von Behältern (also das Aufnehmen eines Vorformlings das Ausformen und Befüllen innerhalb der Form und das Freigeben eines Behälters) nicht notwendig, bei dieser dreiteiligen Ausführung ein Antreiben der Formträger, der Formschalen und der Hohlformen unabhängig voneinander zu ermöglichen.

Erfindungsgemäß ist jedoch insbesondere mit Hinblick auf die Reinigung vorgesehen, dass jeder der Teile der Formen bzw. Formhälften über eine Antriebseinheit mit einem jeweils benachbarten Teil der Formhälften verbunden ist, sodass auch diese beiden Teile relativ zueinander bewegt werden können. Die separaten Antriebseinheiten sind hier nicht dargestellt. Dabei muss es sich nicht notwendigerweise um unterschiedliche Antriebseinheiten handeln. Die Formhälften können auch wie in Figur 3a dargestellt auf einer gemeinsamen Führung 350 angeordnet sein und mithilfe der Antriebseinrichtungen 340 bewegbar sein. Alternativ kann auch vorgesehen sein, dass für jeden der Teile, also die Hohlform 310, die Formschale 320 und den Formträger 330 eine separate Führung mit einem oder mehreren Anschlägen zum definieren bestimmter Endpunkte einer Bewegung und eine entsprechende Antriebseinheit zum Bewegen dieses Teils der Formhälften vorgesehen wird.

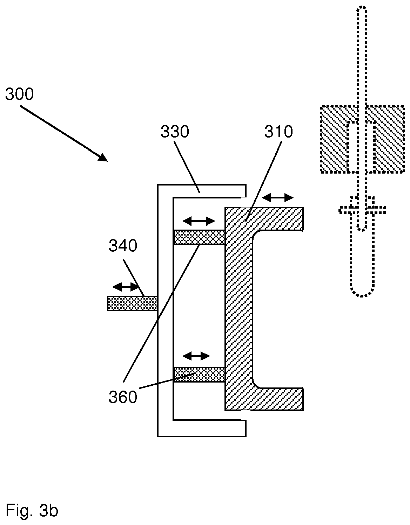

Figur 3b zeigt eine weitere Ausführungsform, bei der die Formhälften zweiteilig ausgebildet sind. So umfasst die Formhälfte 300 gemäß diese Ausführungsform nur die Hohlform 310 und den Formträger 330. Um sicherzustellen, dass die Hohlformen 310 zweier Formhälften einer Formfüllstation mit ausreichendem Druck gegeneinander gepresst werden, um das Bilden von unerwünschten Nähten an der Oberfläche des Behälters beim Ausformen zu verhindern, ist es besonders bei der zweiteiligen Ausführung der Formhälften vorteilhaft, wenn die Hohlform 310 und der Formträger 330 über eine Antriebseinheit, insbesondere eine Hydraulikeinheit 360 miteinander verbunden sind. Somit kann der für das Ausformen eines Behälters notwendige Druck der Hohlformen 310 gegeneinander aufgebaut werden. Entweder separat dazu oder als eine Antriebseinheit ausgebildet, kann ein Antrieb 340 für die Formträger 330 der Formhälften vorgesehen sein.

Während die in Figur 3a und 3b dargestellten Formhälften aus Teilen aufgebaut sind, die entlang der dargestellten Führungen translatorisch nach links oder rechts bewegt werden können, kann auch vorgesehen sein, dass die jeweiligen Formhälften miteinander spreizbar verbunden sind, sodass die zwei Formhälften aufgeklappt werden können. In jedem Fall ist vorgesehen, dass die Bestandteile der Formhälften voneinander trennbar sind, sodass die Zwischenräume der einzelnen Teile gereinigt werden können.

Besonders bevorzugt ist es, wenn die einzelnen Teile der Formhälften in einer Reinigungsposition weiter auseinander gefahren sind, als im üblichen Betrieb, sodass die Reinigung auch der Zwischenräume der Teile der Formhälften möglich wird. Im Betrieb werden die Formhälften üblicherweise zwischen einer Ausformposition und einer Aufnahmeposition bewegt. Dabei werden sie zur Aufnahme eines Behälters in der Aufnahmeposition (und auch zum Ausgeben des Behälters nachdem dieser ausgeformt und befüllt wurde) auseinandergefahren bzw. geöffnet, wobei sie entweder um eine Drehachse gedreht und dabei gespreizt werden, oder voneinander weg bewegt werden. In dieser Stellung sind die Formhälften gerade weit genug voneinander entfernt, um einen Behälter aufzunehmen. In der Reinigungsposition kann der Abstand der Formhälften zueinander und insbesondere der Abstand der einzelnen Teile der Formhälften vorzugsweise größer sein, als in der Aufnahmeposition, um ein gutes Reinigungsergebnis zu erzielen.

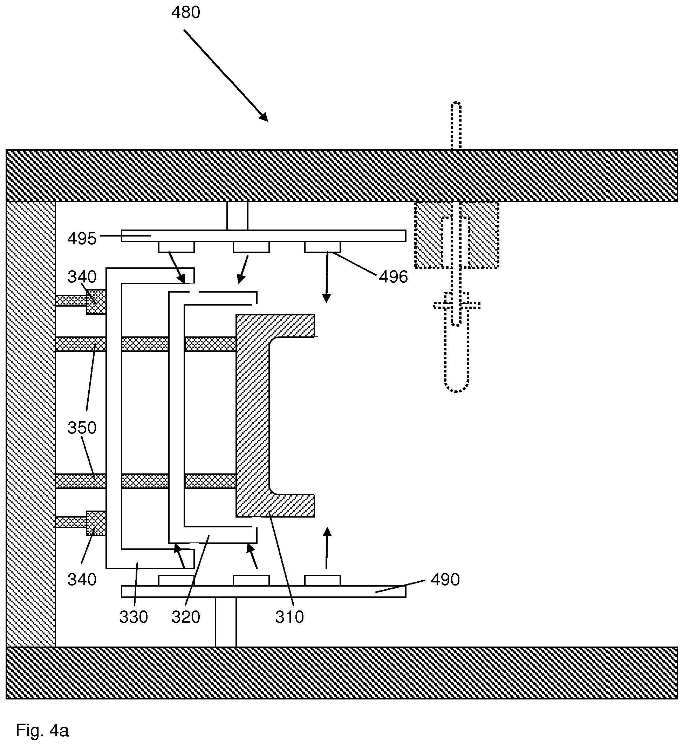

Dazu zeigt Figur 4a eine Ausführungsform einer in die Formfüllmaschine (hier nur ausschnittsweise mit dem Bezugszeichen 480 dargestellt) integrierten Reinigungseinrichtung. Die Reinigungseinrichtung 490 und 495 kann dabei fest mit der Formfüllstation oder dem Karussell der Formfüllmaschine verbunden sein oder an der Peripherie der Formfüllmaschine angeordnet sein. Besonders vorteilhaft ist eine Anordnung in einem für die Behälterbehandlung (Ausformen und Befüllen) nicht verwendeten Bereich der Formfüllmaschine. Einen solchen Bereich gibt es beispielsweise zwischen den Transporteinrichtungen, die die Vorformlinge in die Formfüllmaschine befördern, und den Transporteinrichtungen, die die fertig geformten und befüllten Behälter aus der Formfüllmaschine abtransportieren.

Die Reinigungseinrichtung 490 bzw. 495 kann als Leitung ausgebildet sein, in der ein Reinigungsmedium transportiert wird, wie dies in Figur 4a dargestellt ist. Zum Ausbringen des Reinigungsmediums können eine oder mehrere Düsen 496 vorgesehen sein, die das Reinigungsmedium auf die einzelnen Teile der auseinander gefahrenen Formhälften aufbringen können. Um Platz zu sparen kann auch vorgesehen sein, dass nur eine einzelne Düse beweglich entlang einer Führung vorgesehen ist, die über eine entsprechend flexibler Zuleitung die einzelnen Teile der Formhälften reinigen kann. Besonders vorteilhaft ist weiterhin, wenn die Düse oder die Düsen verschwenkt werden können, sodass das Reinigungsmedium aus unterschiedlichen Winkeln auf die einzelnen Teile der Formhälften aufgebracht werden kann. Damit kann das Reinigen insbesondere schwer zugänglicher Zwischenräume erleichtert werden.

Sind die Formhälften, wie in Figur 4a dargestellt, auseinander gezogen bzw. auseinander gefahren, so kann auch vorgesehen sein, dass senkrecht zur Zeichenebene in freie Bereiche zusätzliche Düsen eingeführt werden (beispielsweise an entsprechenden Lanzen oder Führungen) um auch den innen liegenden Bereich der einzelnen Bestandteile der Formhälften reinigen zu können. Diese Ausführungsform ist insbesondere bei mit den Formfüllstationen mitgeführten Reinigungseinrichtungen vorteilhaft, da hier keine oder nur eine geringe Bewegung der Formhälften oder der Bestandteile der Formhälften relativ zur Reinigungseinrichtung während eines Reinigungsschritts erfolgt.

Demgegenüber erfolgt bei einer fest an der Formfüllmaschine (nicht mit dem Karussell, wie es in Fig. 1 dargestellt ist, mitdrehend) montierten Reinigungseinrichtung eine Bewegung der einzelnen Formhälften relativ zur Reinigungseinrichtung. In diesem Fall kann vorgesehen sein, dass die einzelnen Düsen 496 Reinigungsmedium aus unterschiedlichen Winkeln auf die Bestandteile der Formfüllstation leiten, um eine vollständige Reinigung gewährleisten zu können.

Bei der Reinigung kann grundsätzlich Medium mit hohem Druck zur Reinigung eingesetzt werden, um das Entfernen auch fester Rückstände, die beispielsweise beim Platzen eines Behälters in der Hohlform verbleiben können, sicherzustellen.

Abhängig vom Durchsatz der Formfüllmaschine kann auch vorgesehen sein, dass mehrstufige Reinigungsprozesse zum Einsatz kommen. So kann es abhängig von der Rotationsgeschwindigkeit realisierbar sein, dass die einzelnen Formhälften bei jedem Umlauf soweit auseinander gefahren werden, dass zumindest eine Reinigung mit unter Hochdruck eingelassenem Gas möglich ist. Dazu können entweder dieselben Düsen verwendet werden durch die auch flüssiges Reinigungsmedium geleitet wird oder es können an der Reinigungseinrichtung zusätzliche Düsen vorgesehen sein, die ein gasförmiges Medium in Richtung der Teile der Formhälften ausleiten können. Dabei kann insbesondere H2O2 (Wasserstoffperoxid) verwendet werden, da dies eine desinfizierende Wirkung besitzt.

Insbesondere wenn die Reinigung der Teile der Formhälften nur im Falle des Platzens eines Behälters oder anderer unvorhergesehener Verunreinigungen erfolgt, die gleichzeitig mit einem Stillstand oder Wartungsarbeiten der Formfüllmaschine einhergehen, können auch Reinigungsmedien mit Schaumentwicklung zum Einsatz kommen, um eine gründliche Reinigung zu gewährleisten. Werden die Formhälften auch während des Betriebs zumindest grob gereinigt, können neben gasförmigen Reinigungsmedien auch Sprühnebel verwendet werden, die beispielsweise peressigsäurehaltig sind.

Da die Hohlformen jedoch im Betrieb nicht mit Flüssigkeit benetzt werden sollten, um ein fehlerhaftes Ausformen der Behälter zu verhindern, kann vorgesehen sein, dass die Hohlformen während des Betriebs zumindest grob mit einem gasförmigen Reinigungsmedium gereinigt werden wohingegen die übrigen Teile der Formhälften auch während des Betriebs mit Sprühnebel oder flüssigen Reinigungsmedien behandelt werden können.

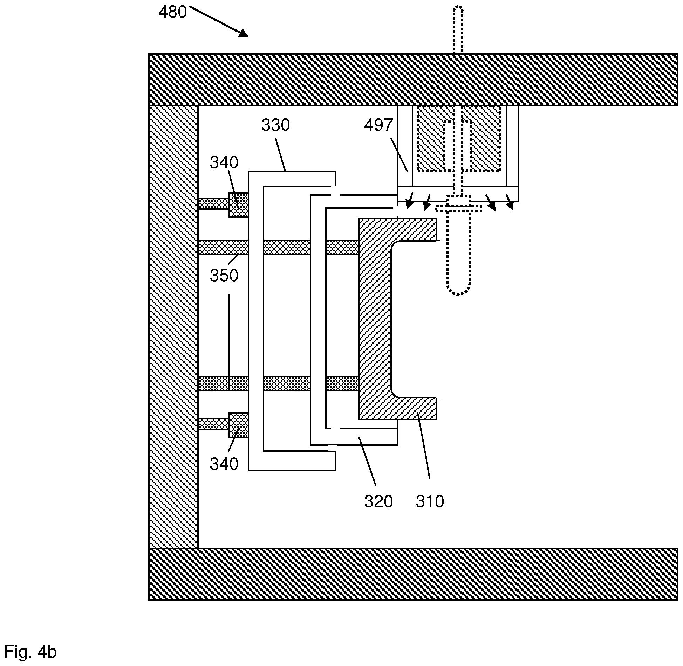

Figur 4b zeigt eine weitere Ausführungsform bei der die Reinigungseinrichtung oder zumindest ein Teil der Reinigungseinrichtung 497 als Ring um die Öffnung in der Form, in der sich die Öffnung des Vorformlings befindet, angeordnet ist. Dieser Teil der Reinigungseinrichtung kann insbesondere die Hohlform 310 gezielt reinigen. Da es beim Ausformen und gleichzeitigem oder direkt nachfolgendem Befüllen der Behälter stets zu unerwünschten Produktresten an der Hohlform kommen kann, die nachteilig für das Ausformen folgender Behälter sind, kann diese Reinigungseinrichtung beispielsweise unter Verwendung von Druckluft bei jedem Behandlungszyklus, bei dem die Hohlform zumindest teilweise geöffnet wird um einen Behälter auszugeben und/oder einen neuen Vorformling aufzunehmen, eine Reinigung der Innenfläche der Hohlform vornehmen. Somit können unerwünschte Nebeneffekte durch Verunreinigungen vermieden werden.

Alternativ oder zusätzlich dazu kann auch vorgesehen sein, dass an einer Reckstange, die für das Verstrecken des Vorformlings verwendet wird, Düsen angeordnet sind, die ebenfalls ein gasförmiges oder flüssiges Reinigungsmedium auf die Innenseite der Hohlform auftragen können.

Während in den obigen Ausführungsformen die Reinigungseinrichtung entweder mit der Formfüllstation mit bewegt wurde (also beispielsweise für jede Formfüllstation eine separate Reinigungseinrichtung vorgesehen war) oder eine mit der Formfüllmaschine fest verbundene Reinigungseinrichtung vorgesehen war, kann auch vorgesehen sein, entweder die komplette Formfüllstation oder zumindest die Form, umfassend die beiden Formhälften, aus der Formfüllmaschine herauszufahren und in eine Reinigungseinrichtung, die neben der Formfüllmaschine angeordnet, zu überführen.

Eine besonders vorteilhaft Ausführungsform wäre hier das Ausbilden einer Reinigungseinrichtung als Karussell, das zur Aufnahme der Formen geeignet ist, sodass die einzelnen Formen während eines Umlauf um diese Reinigungseinrichtung gereinigt werden und anschließend an die passende Stelle in der Formfüllstation zurückgegeben werden können. Zu diesem Zweck müssen die Antriebseinrichtungen der Formen von diesen lösbar sein und ebenso müssen die einzelnen Führungen die Form freigeben können. Vorteilhaft ist hier auch, wenn der Formfüllmaschine und der Reinigungseinrichtung insgesamt mehr Formen zugeordnet sind, als Formfüllstationen an der Formfüllmaschine angeordnet sind. So können die Formen der Formfüllstationen nach dem Ausformen und Befüllen eines Behälters der Reinigungseinrichtung zugeführt werden und eine gereinigte Form aus der Reinigungseinrichtung dem Karussell zugeführt werden. Damit kann eine kontinuierliche Reinigung der Formhälften realisiert werden.

Besonders vorteilhaft ist es hier, wenn die Formen in einer ersten Ebene aus der Formfüllmaschine an die Reinigungseinrichtung übergeben werden und in einer zweiten, zur ersten Ebene parallelen aber entlang der Rotationsachse des Karussells versetzten Ebene von der Reinigungseinrichtung an die Formfüllmaschine übergeben werden. So kann zeitgleich eine Form von der Formfüllmaschine bzw. dem Karussell an die Reinigungseinrichtung und eine Form von der Reinigungseinrichtung an die Formfüllmaschine übergeben werden. So kann ein Reinigungs- und Arbeitskreislauf während des Betriebs der Formfüllmaschine realisiert werden und sichergestellt werden, dass jede Formfüllstation stets einen Behälter in eine saubere Form aufnehmen kann.

## Patentansprüche

1. Formfüllmaschine (10) zum Formen von Vorformlingen zu Behältern und Füllen der Behälter, mit einer oder mehrerer Formfüllstationen (5), in denen der Vorformling in einer Form (6) ausgeformt und der Behälter befüllt werden kann und die jeweils zwei Formhälften (6a, 6b) umfassen, wobei die Formhälften (6a, 6b)zum Öffnen relativ zueinander bewegbar sind und eine Reinigungseinrichtung (490, 495) vorgesehen ist, die die geöffneten Formhälften (6a, 6b) reinigen kann, **dadurch gekennzeichnet, dass** die Formhälften (6a, 6b) zwischen einer Ausformposition, einer Aufnahmeposition und einer Reinigungsposition verfahrbar sind, wobei der Abstand oder der Öffnungswinkel der Formhälften (6a, 6b) im der Reinigungsposition größer ist als in der Aufnahmeposition.

2. Formfüllmaschine nach Anspruch 1, **dadurch gekennzeichnet, dass** die Formhälften dreiteilig ausgebildet sind und einen Formträger (330), eine Formschale (320) und eine Hohlform (310) umfassen, wobei die Teile der Formhälften (6a, 6b) relativ zueinander bewegbar sind.

3. Formfüllmaschine nach Anspruch 1, **dadurch gekennzeichnet, dass** die Formhälften (6a, 6b) zweiteilig ausgebildet sind und einen Formträger und eine Hohlform (310) umfassen.

4. Formfüllmaschine nach Anspruch 2 oder 3, **dadurch gekennzeichnet, dass** zwischen den Teilen der Formhälften (6a, 6b) eine Antriebseinheit angeordnet ist, die die Teile jeder Formhälfte (6a, 6b) relativ zueinander bewegen kann.

5. Formfüllmaschine nach Anspruch 4 oder 5, **dadurch gekennzeichnet, dass** die Antriebseinheit eine Hydraulikeinheit ist oder diese umfasst.

6. Formfüllmaschine nach Anspruch 5, **dadurch gekennzeichnet, dass** die Antriebseinheit die Formhälften (6a, 6b) bewegen kann.

7. Formfüllmaschine nach Anspruch 2 oder 3, **dadurch gekennzeichnet, dass** die Teile der Formhälften (6a, 6b) jeweils auf einer gemeinsamen Führung angeordnet sind.

8. Formfüllmaschine nach einem der Ansprüche 1 bis 7, **dadurch gekennzeichnet, dass** ein flüssiges Reinigungsmedium oder ein gasförmiges Reinigungsmedium verwendet wird.

9. Formfüllmaschine nach einem der Ansprüche 1 bis 8, **dadurch gekennzeichnet, dass** die Reinigungseinrichtung an einer Peripherie der Formfüllmaschine angeordnet ist.

10. Formfüllmaschine nach einem der Ansprüche 1 bis 8, **dadurch gekennzeichnet, dass** jeder Formfüllstation (5) jeweils eine Reinigungseinrichtung zugeordnet ist.

## Claims

1. Mold filling machine (10) for forming preforms into containers and filling the containers, with one or more mold filling stations (5) in which the preform can be shaped in a mold (6) and the container can be filled, and which respectively comprise two mold halves (6a, 6b), wherein the mold halves (6a, 6b) are movable relative to each other for opening, and a cleaning device (490, 495) is provided which can clean the opened mold halves (6a, 6b), **characterized in that** the mold halves (6a, 6b) are movable between a shaping position, a receiving position and a cleaning position, wherein the distance or the opening angle of the mold halves (6a, 6b) in the cleaning position is greater than in the receiving position.

2. Mold filling machine according to claim 1, **characterized in that** the mold halves are made in three parts and comprise a mold carrier (330), a mold shell (320) and a hollow mold (310), wherein the parts of the mold halves (6a, 6b) are movable relative to each other.

3. Mold filling machine according to claim 1, **characterized in that** the mold halves (6a, 6b) are made in two parts and comprise a mold carrier and a hollow mold (310).

4. Mold filling machine according to claim 2 or 3, **characterized in that** between the parts of the mold halves (6a, 6b) a drive unit is arranged, which can move the parts of each mold half (6a, 6b) relative to each other.

5. Mold filling machine according to claim 4 or 5, **characterized in that** the drive unit is a hydraulic unit or comprises said unit.

6. Mold filling machine according to claim 5, **characterized in that** the drive unit can move the mold halves (6a, 6b).

7. Mold filling machine according to claim 2 or 3, **characterized in that** the parts of the mold halves (6a, 6b) are each arranged on a common guide.

8. Mold filling machine according to one of claims 1 to 7, **characterized in that** a liquid cleaning medium or a gaseous cleaning medium is used.

9. Mold filling machine according to one of claims 1 to 8, **characterized in that** the cleaning device is arranged on a periphery of the mold filling machine.

10. Mold filling machine according to one of claims 1 to 8, **characterized in that** each mold filling station (5) is associated with a respective cleaning device.

## Revendications

1. Machine de formage et de remplissage (10) pour assurer le formage de préformes en des contenants et le remplissage de ces contenants, la machine comprenant un ou plusieurs postes de formage et de remplissage (5) dans lesquels la préforme est amenée à sa forme définitive dans un moule (6) et dans lesquels le contenant peut être rempli, et qui comportent chacun deux moitiés de moule (6a, 6b), les moitiés de moule (6a, 6b) étant déplaçables l'une par rapport à l'autre pour assurer l'ouverture du moule, et un dispositif de nettoyage (490, 495) étant prévu pour permettre le nettoyage des moitiés de moule (6a, 6b) ouvertes, **caractérisée en ce que** les moitiés de moule (6a, 6b) peuvent être déplacées entre une position de formage, une position d'accueil de préforme et une position de nettoyage, la distance ou l'angle d'ouverture des moitiés de moule (6a, 6b) étant plus grande ou plus grand dans la position de nettoyage que dans la position d'accueil.

2. Machine de formage et de remplissage selon la revendication 1, **caractérisée en ce que** les moitiés de moule sont réalisées en trois parties et comprennent un support de moule (330), une coque de moule (320) et un moule creux (310), les parties des moitiés de moule (6a, 6b) pouvant être déplacées relativement les unes par rapport aux autres.

3. Machine de formage et de remplissage selon la revendication 1, **caractérisée en ce que** les moitiés de moule (6a, 6b) sont réalisées en deux parties, et comprennent un support de moule et un moule creux (310).

4. Machine de formage et de remplissage selon la revendication 2 ou la revendication 3, **caractérisée en ce qu'**entre les parties des moitiés de moule (6a, 6b) est agencée une unité d'entraînement, qui peut déplacer les parties de chaque moitié de moule (6a, 6b) les unes par rapport aux autres.

5. Machine de formage et de remplissage selon la revendication 4 ou la revendication 5, **caractérisée en ce que** l'unité d'entraînement est une unité hydraulique ou comprend celle-ci.

6. Machine de formage et de remplissage selon la revendication 5, **caractérisée en ce que** l'unité d'entraînement peut déplacer les moitiés de moule (6a, 6b) .

7. Machine de formage et de remplissage selon la revendication 2 ou la revendication 3, **caractérisée en ce que** les parties des moitiés de moule (6a, 6b) sont agencées respectivement sur un guidage commun.

8. Machine de formage et de remplissage selon l'une des revendications 1 à 7, **caractérisée en ce que** l'on utilise un agent de nettoyage liquide ou un agent de nettoyage gazeux.

9. Machine de formage et de remplissage selon l'une des revendications 1 à 8, **caractérisée en ce que** le dispositif de nettoyage est agencé au niveau d'une périphérie de la machine de formage et de remplissage.

10. Machine de formage et de remplissage selon l'une des revendications 1 à 8, **caractérisée en ce qu'**à chaque poste de formage et de remplissage (5) est associé respectivement un dispositif de nettoyage.
